**Europäisches Patentamt**

**European Patent Office**

**Office européen des brevets**

(19)

(11) Veröffentlichungsnummer: **0 113 838**
**B1**

# EUROPÄISCHE PATENTSCHRIFT

(45) Veröffentlichungstag der Patentschrift:
22.07.87

(21) Anmeldenummer: 83111856.7

(22) Anmeldetag: 26.11.83

(51) Int. Cl.⁴: **G 02 F 1/133,** G 09 F 9/35

(54) Flüssigkristall-Anzeigevorrichtung und Verfahren zu deren Herstellung.

(30) Priorität: 11.12.82 DE 3245932

(43) Veröffentlichungstag der Anmeldung:
25.07.84 Patentblatt 84/30

(45) Bekanntmachung des Hinweises auf die Patenterteilung:
22.07.87 Patentblatt 87/30

(84) Benannte Vertragsstaaten:
DE FR GB IT

(56) Entgegenhaltungen:
DE-A-2 707 599
DE-A-2 738 305
FR-A-2 506 978
GB-A-1 336 254
GB-A-1 350 601
GB-A-1 350 601
GB-A-2 014 345
US-A-3 926 502

PATENTS ABSTRACTS OF JAPAN, Band 5, Nr. 177,
13. November 1981, (P-89) (849)
PATENTS ABSTRACTS OF JAPAN, Band 6, Nr. 152,
12. August 1982, (P-134) (1030)

(73) Patentinhaber: **Licentia Patent- Verwaltungs- GmbH,
Theodor- Stern- Kai 1, D-6000 Frankfurt/Main 70
(DE)**

(72) Erfinder: **Brendle, Konrad, Hauffstrasse 5, D-7909
Dornstadt (DE)**
Erfinder: **Schiffer, Harald, Dipl.- Ing., Johann-
Sebastian- Bach- Strasse 1, D-7959 Kirchberg (DE)**
Erfinder: **Fahrenschon, Kurt, Dipl.- Phys.,
Hirschstrassse 8, D-7914 Pfaffenhofen (DE)**

(74) Vertreter: **Amersbach, Werner, Dipl.- Ing., Licentia
Patent- Verwaltungs- GmbH Theodor- Stern- Kai
1, D-6000 Frankfurt 70 (DE)**

## Beschreibung

Die vorliegende Erfindung betrifft eine Flüssigkristall-Anzeigevorrichtung mit mehreren getrennt voneinander elektrisch ansteuerbaren aktiven Anzeigebereichen und mit mehreren dazwischenliegenden nicht ansteuerbaren passiven Flächenbereichen sowie mit einer zwischen zwei Deckplatten eingeschlossenen Flüssigkristallschicht, die sich im wesentlichen nur in den aktiven Anzeigebereichen befindet, sowie ein Verfahren zu deren Herstellung.

Es sind bereits als Multifunktions-Anzeigetableaus bezeichnete Flüssigkristall-Anzeigezellen bekannt, die mehrere getrennt voneinander elektrisch ansteuerbare Anzeigebereiche aufweisen. Bei solchen Mehrfachanzeigen ist es üblich, daß auch in den Bereichen, die elektrisch nicht ansteuerbar sind (passive Bereiche), Flüssigkristallmaterial zwischen den beiden Deckplatten befindet. Abgesehen von der Tatsache, daß in solchen Anzeigezellen wesentlich mehr Flüssigkristallmaterial enthalten ist als zur Anzeige benötigt wird, ist die Herstellung insbesondere dann, wenn diese Anzeigezellen großflächig sind, verhältnismäßig kompliziert und die mechanische Stabilität nicht immer zufriedenstellend.

Aus der GB-A-13 50 601 ist eine Flüssigkristall-Anzeigevorrichtung bekannt, bei der das Flüssigkristallmaterial nur in den aktiven Anzeigebereichen vorhanden ist, die passiven Bereiche jedoch großflächig aus Isoliermaterial bestehen.

Der vorliegenden Erfindung liegt die Aufgabe zugrunde, eine Anzeigevorrichtung der eingangs genannten Art anzugeben, die auch bei Ausbildung als großflächiges Anzeigetableau eine erhöhte mechanische Stabilität besitzt, die sich einfach im Zuge automatischer Fertigungsmethoden herstellen läßt und die wenig Flüssigkristallmaterial benötigt.

Diese Aufgabe wird erfindungsgemäß dadurch gelöst, daß die beiden Deckplatten verbindende, die Flüssigkristall-Schichtbereiche begrenzende Dämme vorgesehen sind, die zusammen mit dem Deckplatten mehrere nicht mit Flüssigkristallmaterial gefüllte, in sich abgeschlossene und zumindest teilevakuierte Hohlräume bilden, die im wesentlichen den passiven Flächenbereichen (Va) entsprechen.

Die erfindungsgemäß vorgesehenen, zwischen den aktiven Anzeigebereichen befindlichen Hohlräume, in welchen ein Unterdruck herrscht, bewirken ein ständiges Zusammenpressen der beiden Deckplatten, so daß deren Abstand voneinander, der durch zwischen den Deckplatten befindliche Distanzteilchen oder Erhöhungen auf den Deckplatten bestimmt wird, sehr stabil eingehalten wird. Das aufgebrachte Verbindungsmaterial schließt die passiven Hohlräume vakuumdicht oder wenigstens druckdicht ab, so daß kein Flüssigkristallmaterial in diese Hohlräume gelangt. Da diese Dämme fest mit den Deckplatten nach Art eines Klebers oder eines Lotes verbunden sind, erhöhen sie zusätzlich die mechanische Festigkeit, was besonders bei großflächigen Tableaus sehr vorteilhaft ist. Schließlich wird auch Flüssigkristallmaterial eingespart, was durchaus beachtenswert ist, wenn man bedenkt, daß die aktiven Anzeigebereiche im allgemeinen weniger als 50 % der Gesamtfläche ausmachen.

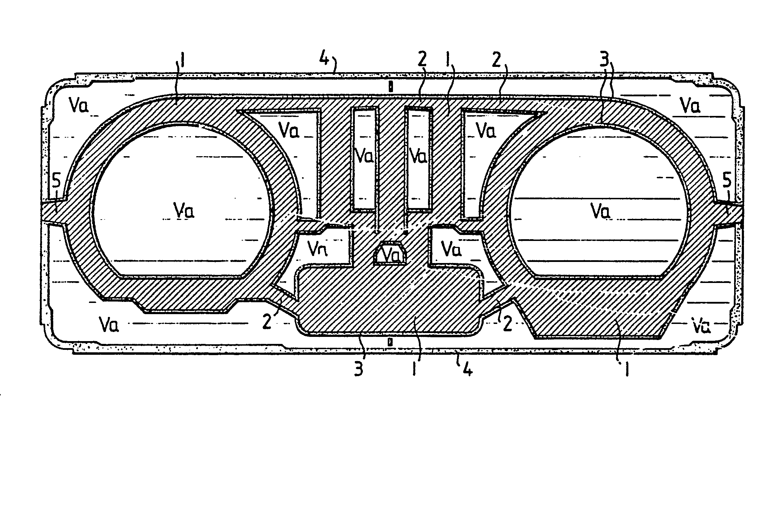

Anhand des in der Figur dargestellten Ausführungsbeispiels eines Automobil-Anzeigetableaus, das schematisch in Aufsicht dargestellt ist, wird die Erfindung nachfolgend näher erklärt.

Die passiven Flächenbereiche, in denen ein Unterdruck herrscht, sind mit Va bezeichnet. Sie enthalten kein Flüssigkristallmaterial und sind durch die dammartige Klebe- oder Lotverbindungen 3 begrenzt. Die Dämme 3 begrenzen gleichzeitig im wesentlichen die aktiven Anzeigebereiche 1, in welchen sich das Flüssigkristallmaterial befindet. Die aktiven Anzeigebereiche sind fein schraffiert. Die Flüssigkristallschicht in diesen Bereichen steht über Verbindungskanäle 2, die ebenfalls durch die Dämme 3 begrenzt sind, miteinander in Verbindung, wodurch die Herstellung, insbesondere das Einfüllen des Flüssigkristallmaterials wesentlich erleichtert wird. Das Einfüllen erfolgt über einen oder mehrere Einfüllkanäle 5. Am Rand befindet sich zweckmäßig eine zusätzliche Verbindungsnaht 4.

Das Aufbringen des die Dämme 3 und der Verbindungsnaht 4 bildenden Lotes oder Klebers erfolgt zweckmäßig unter Anwendung eines Siebdruckverfahrens. Das Erzeugen des Unterdrucks in den die passiven Bereiche bildenden Hohlräumen Va geschieht zweckmäßig, indem man die beiden Deckplatten, die aus Glas oder auch aus einem gegebenenfalls flexiblen Kunststoff bestehen können, in einer Vakuumkammer aufeinandergepreßt und das aufgebrachte Klebe- oder Lotmaterial verfestigt, wodurch die Deckplatten fest miteinander verbunden werden. Der Abstand zwischen den Deckplatten wird durch zwischengefügte Distanzpartikel gewährleistet.

Nach Herausnehmen der miteinander verbundenen Deckplatten bleibt der Unterdruck in den Hohlräumen der passiven Bereiche erhalten. Über die Füllöffnungen 5 wird dann das Flüssigkristallmaterial eingefüllt, das infolge der Verbindungskanäle 2 in die Hohlräume der Anzeigebereiche 1 eindringt. Danach werden die Füllöffnungen 5 verschlossen.

Gemäß einer Weiterbildung der Erfindung sind zwei oder mehrere Gruppen von aktiven Anzeigebereichen vorgesehen. Dabei sind die Anzeigebereiche innerhalb einer Gruppe durch Verbindungskanäle miteinander verbunden. Die einzelnen Gruppen sind jedoch nicht durch Verbindungskanäle miteinander verbunden, sondern voneinander getrennt. Die einzelnen Gruppen sind bevorzugt mit verschiedenartigen Flüssigkristallmaterialien gefüllt. In diesem Fall ist jeder Gruppe zumindest sin eigener Füllkanal zugeordnet. Eine Gruppe kann ggf. auch nur aus einem Anzeigebereich bestehen.

**Patentanspruche**

1. Flüssigkristall-Anzeigevorrichtung mit mehreren getrennt voneinander elektrisch ansteuerbaren (aktiven) Anzeigebereichen und mit mehreren dazwischenliegenden nicht ansteuerbaren passiven Flächenbereichen sowie mit einer zwischen zwei Deckplatten eingeschlossenen Flüssigkristallschicht, die sich im wesentlichen nur in den aktiven Anzeigebereichen befindet, <u>dadurch gekennzeichnet</u>, daß die beiden Deckplatten verbindende, die Flüssigkristall-Schichtbereiche (1) begrenzende Dämme (3) vorgesehen sind, die zusammen mit dem Deckplatten mehrere nicht mit Flüssigkristallmaterial gefüllte, in sich abgeschlossene und zumindest teilevakuierte Hohlräume bilden, die im wesentlichen den passiven Flächenbereichen (Va) entsprechen.

2. Flüssigkristall-Anzeigevorrichtung nach Anspruch 1, dadurch gekennzeichnet, daß die mit Flüssigkristallmaterial versehenen Anzeigebereiche (1) durch Verbindungskanäle (2) miteinander in Verbindung stehen.

3. Flüssigkristall-Anzeigevorrichtung nach Anspruch 1 oder Anspruch 2, dadurch gekennzeichnet, daß zumindest ein Füllkanal (5) zum Einbringen des Flüssigkristallmaterials in die aktiven Anzeigebereiche (1) vorgesehen ist.

4. Flüssigkristall-Anzeigevorrichtung nach einem der Ansprüche 1 bis 3, dadurch gekennzeichnet, daß zumindest eine der beiden Deckplatten aus flexiblem Material besteht.

5. Flüssigkristall-Anzeigevorrichtung nach einem der Ansprüche 1 bis 4, dadurch gekennzeichnet, daß zumindest eine der beiden Deckplatten aus Glas besteht.

6. Flüssigkristall-Anzeigevorrichtung nach einem der Ansprüche 1 bis 5, dadurch gekennzeichnet, daß zwei oder mehrere nicht miteinander in Verbindung stehende, mit Flüssigkristallmaterial versehene aktive Anzeigebereiche (1) vorgesehen sind, die durch getrennte Füllkanäle (5) mit Flüssigkristallmaterial verschiedener Art füllbar sind.

7. Verfahren zum Herstellen einer Flüssigkristall-Anzeigevorrichtung nach einem der Ansprüche 3 bis 6, dadurch gekennzeichnet, daß zumindest auf eine der beiden Deckplatten, insbesondere in Siebdrucktechnik, die Dämme (3) und die Umfangsdichtung (4) bildendes Klebematerial aufgebracht wird, daß dann in einer Unterdruckkammer die beiden Deckplatten aufeinander gepreßt werden, daß dann der Kleber verfestigt wird, daß dann über die Füllkanäle (5) und die Verbindungskanäle (2) Flüssigkristallmaterial in die die aktiven Bereiche (1) darstellenden Hohlräume eingebracht wird und daß dann die Füllkanäle (5) verschlossen werden.

**Claims**

1. Liquid crystal indicating device with several active indicating regions which are electrically drivable one separately from the other, and with several non-drivable passive area regions lying therebetween as well as with a liquid crystal layer which is enclosed between two cover plates and disposed substantially only in the active indicating regions, characterised thereby, that barriers (3) are provided, which connect both the cover plates, bound the liquid crystal layer regions (1) and which together with the cover plates form several self-contained and at least partially evacuated hollow spaces which are not filled with liquid crystal material and substantially correspond to the passive area regions.

2. Liquid crystal indicating device according to claim 1, characterised thereby, that the indicating regions (1) provided with liquid crystal material stand in connection one with the other through connecting channels (2).

3. Liquid crystal indicating device according to claim 1 or claim 2, cheracterised thereby, that at least one filling channel (5) is provided for the introduction of the liquid crystal material into the active indicating regions (1).

4. Liquid crystal indicating device according to one of the claims 1 to 3, characterised thereby, that at least one of both the cover plates consists of flexible material.

5. Liquid crystal indicating device according to one of the claims 1 to 4, characterised thereby, that at least one of both the cover plates consists of glass.

6. Liquid crystal indicating device according to one of the claims 1 to 5, characterised thereby, that two or more active indicating regions (1) are provided, which do not stand in connection one with the other, are provided with liquid crystal material and are fillable with liquid crystal material of different kind through separate filling channels (5).

7. Method for the production of a liquid crystal indicating device according to one of the claims 3 to 6, characterised thereby, that the barriers (3) and adhesive material forming the circumferential seal (4) are applied onto at least one of both the cover plates, in particular in screen printing technique, that both the cover plates are then pressed one onto the other in an underpressure chamber, that the adhesive material is then solidified, that liquid crystal material is then introduced by way of the filling channels (5) and the connecting channels (2) into the hollow spaces representing the active regions and that the filling channels (5) are then closed off.

## Revendications

1. Dispositif d'affichage à cristaux liquides avec plusieurs zones d'affichage actives, commandées électriquement et isolées entre elles, plusieurs zones superficielles passives, non commandées et disposées entre les précédentes, et une couche de cristaux liquides enfermée entre deux lames de couverture et se trouvant pour l'essentiel uniquement dans les zones d'affichage actives, ledit dispositif étant caractérisé en ce que des barrages (3) reliant les deux lames de couverture et délimitant les zones d'affichage à cristaux liquides (1) sont prévus et forment avec les lames de couverture plusieurs cavités fermées, au moins sous vide partiel, non remplies par le matériau à cristaux liquides et correspondant pour l'essentiel aux zones superficielles passives (Va).

2. Dispositif d'affichage à cristaux liquides selon revendication 1, caractérisé en ce que les zones d'affichage (1) contenant du matériau à cristaux liquides sont reliées par des canaux de liaison (2).

3. Dispositif d'affichage à cristaux liquides selon une des revendications 1 ou 2, caractérisé par au moins un canal de remplissage (5) pour l'introduction du matériau à cristaux liquides dans les zones d'affichage actives (1).

4. Dispositif d'affichage à cristaux liquides selon une quelconque des revendications 1 à 3, caractérisé en ce qu'une au moins des deux lames de couverture est constituée par un matériau flexible.

5. Dispositif d'affichage à cristaux liquides selon une quelconque des revendications 1 à 4, caractérisé en ce qu'une des deux lames de couverture au moins est en verre.

6. Dispositif d'affichage à cristaux liquides selon une quelconque des revendications 1 à 5, caractérisé par deux ou plusieurs zones d'affichage actives (1), contenant le matériau à cristaux liquides, non reliées entre elles et que les canaux séparés (5) permettent de remplir avec divers types de matériau à cristaux liquides.

7. Procédé de production d'un dispositif d'affichage à cristaux liquides selon une quelconque des revendications 3 à 6, caractérisé en ce que le matériau adhésif formant les barrages (3) et le joint périphérique (4) est déposé sur une des deux lames de couverture au moins, par sérigraphie en particulier; les deux lames de couverture sont ensuite assemblées sous pression dans une chambre à vide; l'adhésif se solidifie; le matériau à cristaux liquides est introduit dans les cavités formant les zones actives (1) par les canaux de remplissage (5) et les canaux de liaison (2); et les canaux de remplissage (5) sont obturés.